# EUROPEAN PATENT APPLICATION

(11) **EP 4 507 207 A1**
(43) Date of publication of application: **12.02.2025**
(21) Application number: 23190781.7
(22) Date of filing: 10.08.2023
(51) Int. Cl.: H04B 7/0408, H04B 7/06, H04B 7/08

(54) **FACILITATING LOW SYSTEM OVERHEAD SYSTEM INFORMATION DELIVERY IN BEAM BASED SYSTEM**

(71) Applicant: Nokia Technologies Oy, 02610 Espoo (FI)
(72) Inventor: Hakola, Sami-Jukka, 90450 Kempele (FI); Karjalainen, Juha Pekka, 88600 Sotkamo (FI); Kaikkonen, Jorma Johannes, 90800 Oulu (FI); Koskela, Timo, 90670 Oulu (FI)
(74) Representative: TBK

(57) **Abstract**

Various examples of embodiments described herein relate to methods and apparatuses for facilitating low system overhead system information delivery in a beam based system. One such example of an embodiment relates to a method that includes receiving a synchronization signal block, SSB, comprising an information block; determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and, if determined that the received SSB is one SSB among the plurality of SSBs, receiving the single SIB based on the QCL relationship.

## Description

### Technical Field

Various examples of embodiments described herein relate to a method and an apparatus for facilitating low system overhead system information delivery in a beam based system.

### Background

Over time, an increasing extension of communication networks has taken place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication networks and access environments.

By way of example, 3GPP defines 5G Core Network Function's (NF's) interfaces and relevant Application Programming Interfaces (APIs) for each NF to communicate between NFs.

### SUMMARY

Various examples of embodiments described in the subject disclosure provide certain advantages, for example in the form of one or more improvements that are either explicitly described herein or otherwise apparent to a person skilled in the art from the subject disclosure. Hence, at least some examples of embodiments of the subject disclosure aim to provide (or otherwise contribute to) at least part of the aforementioned advantages and improvements.

Various aspects of examples of embodiments of the subject disclosure are set forth in the claims and pertain to methods, apparatuses and computer program products in the context of facilitating low system overhead system information delivery in a beam based system.

At least some of aforementioned advantages and improvements may be achieved through the methods, apparatuses and non-transitory storage media as specified in the claims. Further advantages and improvements may be achieved through the methods, apparatuses and non-transitory storage media set forth in respective dependent claims.

Insofar, according to various examples of embodiments, an apparatus may comprise means for receiving a synchronization signal block, SSB, comprising an information block; means for determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and, if determined that the received SSB is one SSB among the plurality of SSBs, means for receiving the single SIB based on the QCL relationship.

According to various examples of embodiments, the SSB may further comprise a pair of synchronization signals; and the apparatus may further comprise means for receiving the SSB based on detecting at least one synchronization signal of the pair of synchronization signals.

According to various examples of embodiments, the apparatus may further comprise means for receiving the demodulation reference signal based on the QCL relationship; and means for receiving the single SIB further based on the received demodulation reference signal.

According to various examples of embodiments, the apparatus may further comprise means for estimating Doppler shift for a single base station beam among the different base station beams; means for constructing a combined Doppler shift to receive a single frequency network, SFN, transmission from multiple base station beams among the different base station beams; and means for receiving at least one of the following: the single SIB or the demodulation reference signal based on the combined Doppler shift.

It shall be noted that by SFN transmission, it shall be understood that multiple transmissions e.g. from multiple beams, on the same frequency resources, are combined over the air (i.e. over the radio interface).

According to various examples of embodiments, the apparatus may further comprise means for receiving an indication about a number of repetitions for a transmission of the single SIB; and means for receiving the single SIB further based on the indication.

According to various examples of embodiments, the apparatus may further comprise means for determining a number of SSBs forming the plurality of SSBs based on receiving a subcarrier spacing, SCS, indication related to the plurality of SSBs.

According to various examples of embodiments, the QCL relationship may be at least one of the following: average delay, a Doppler shift or a spatial RX parameter.

Moreover, according to at least some examples of embodiments, an apparatus may comprise means for transmitting a plurality of synchronization signal blocks, SSBs, wherein each of the plurality of SSBs comprises an information block and is associated with a different beam emitted from the apparatus, and wherein each information block indicates that the plurality of SSBs have a quasi co-location, QCL, relationship with a demodulation reference signal of a single system information block, SIB; and means for transmitting the single SIB based on the QCL relationship.

According to at least some examples of embodiments, each of the SSBs may further comprises a pair of synchronization signals.

According to at least some examples of embodiments, the apparatus may further comprise means for transmitting the demodulation reference signal based on the QCL relationship.

According to at least some examples of embodiments, the QCL relationship may be based on one of a QCL-TypeC Average delay, a Doppler shift and/or a QCL-TypeD Spatial RX parameter.

According to at least some examples of embodiments, the information block may indicate that the plurality of SSBs are one of 4 SSBs, 8 SSBs and 16 SSBs, which form a single QCL source.

According to at least some examples of embodiments, the apparatus may further comprise means for indicating a number of repetitions for a transmission of the single SIB; and means for transmitting the single SIB further based on the indicated number of repetitions.

Furthermore, according to various examples of embodiments, an apparatus may comprise: at least one processor; and at least one memory storing instructions that, when executed by the at least one processor, may cause the apparatus at least to: receive a synchronization signal block, SSB, comprising an information block; determine, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and, if determined that the received SSB is one SSB among the plurality of SSBs, receive the single SIB based on the QCL relationship.

According to various examples of embodiments, the SSB may further comprise a pair of synchronization signals; and the apparatus may further be caused to receive the SSB based on detecting at least one synchronization signal of the pair of synchronization signals.

According to various examples of embodiments, the apparatus may further be caused to receive the demodulation reference signal based on the QCL relationship; and receive the single SIB further based on the received demodulation reference signal.

According to various examples of embodiments, the apparatus may further be caused to estimate Doppler shift for a single base station beam among the different base station beams; construct a combined Doppler shift to receive a single frequency network, SFN, transmission from multiple base station beams among the different base station beams; and receive at least one of the following: the single SIB or the demodulation reference signal based on the combined Doppler shift.

According to various examples of embodiments, the apparatus may further be caused to receive an indication about a number of repetitions for a transmission of the single SIB; and receive the single SIB further based on the indication.

According to various examples of embodiments, the apparatus may further be caused to determine a number of SSBs forming the plurality of SSBs based on receiving a subcarrier spacing, SCS, indication related to the plurality of SSBs.

According to various examples of embodiments, the QCL relationship may be at least one of the following: average delay, a Doppler shift or a spatial RX parameter.

Moreover, according to at least some examples of embodiments, an apparatus may comprise: at least one processor; and at least one memory storing instructions that, when executed by the at least one processor, may cause the apparatus at least to: transmit a plurality of synchronization signal blocks, SSBs, wherein each of the plurality of SSBs comprises an information block and is associated with a different beam emitted from the apparatus, and wherein each information block indicates that the plurality of SSBs have a quasi co-location, QCL, relationship with a demodulation reference signal of a single system information block, SIB; and transmit the single SIB based on the QCL relationship.

According to at least some examples of embodiments, each of the SSBs may further comprises a pair of synchronization signals.

According to at least some examples of embodiments, the apparatus may further be caused to transmit the demodulation reference signal based on the QCL relationship.

According to at least some examples of embodiments, the QCL relationship may be based on one of a QCL-TypeC Average delay, a Doppler shift and/or a QCL-TypeD Spatial RX parameter.

According to at least some examples of embodiments, the information block may indicate that the plurality of SSBs are one of 4 SSBs, 8 SSBs and 16 SSBs, which form a single QCL source.

According to at least some examples of embodiments, the apparatus may further be caused to indicate a number of repetitions for a transmission of the single SIB; and transmit the single SIB further based on the indicated number of repetitions.

Furthermore, according to at least some examples of embodiments, a method may comprise receiving a synchronization signal block, SSB, comprising an information block; determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and, if determined that the received SSB is one SSB among the plurality of SSBs, receiving the single SIB based on the QCL relationship.

According to various examples of embodiments, the SSB may further comprise a pair of synchronization signals; and the method may further comprise receiving the SSB based on detecting at least one synchronization signal of the pair of synchronization signals.

According to various examples of embodiments, the method may further comprise receiving the demodulation reference signal based on the QCL relationship; and receiving the single SIB further based on the received demodulation reference signal.

According to various examples of embodiments, the method may further comprise estimating Doppler shift for a single base station beam among the different base station beams; constructing a combined Doppler shift to receive a single frequency network, SFN, transmission from multiple base station beams among the different base station beams; and receiving at least one of the following: the single SIB or the demodulation reference signal based on the combined Doppler shift.

According to various examples of embodiments, the method may further comprise receiving an indication about a number of repetitions for a transmission of the single SIB; and receiving the single SIB further based on the indication.

According to various examples of embodiments, the method may further comprise determining a number of SSBs forming the plurality of SSBs based on receiving a subcarrier spacing, SCS, indication related to the plurality of SSBs.

According to various examples of embodiments, the QCL relationship may be at least one of the following: average delay, a Doppler shift or a spatial RX parameter.

Further, according to at least some examples of embodiments, a method may comprise transmitting, at a base station, a plurality of synchronization signal blocks, SSBs, wherein each of the plurality of SSBs comprises an information block and is associated with a different beam emitted from the base station, and wherein each information block indicates that the plurality of SSBs have a quasi co-location, QCL, relationship with a demodulation reference signal of a single system information block, SIB; and transmitting the single SIB based on the QCL relationship.

According to at least some examples of embodiments, each of the SSBs may further comprise a pair of synchronization signals.

According to at least some examples of embodiments, the method may further comprise transmitting the demodulation reference signal based on the QCL relationship.

According to at least some examples of embodiments, the QCL relationship may be based on one of a QCL-TypeC Average delay, a Doppler shift and/or a QCL-TypeD Spatial RX parameter.

According to at least some examples of embodiments, the information block may indicate that the plurality of SSBs are one of 4 SSBs, 8 SSBs and 16 SSBs, which form a single QCL source.

According to at least some examples of embodiments, the method may further comprise indicating a number of repetitions for a transmission of the single SIB; and transmitting the single SIB further based on the indicated number of repetitions.

Additionally, according to various examples of embodiments, there may be provided a computer program product for a computer, including software code portions for performing the steps of any of the above-outlined methods, when said product is run on the computer.

According to at least some examples of embodiments, with regard to the computer program product, the computer program product may include a computer-readable medium on which said software code portions are stored, and/or the computer program product may be directly loadable into the internal memory of the computer and/or transmittable via a network by means of at least one of upload, download or push procedures.

Any one of the aspects mentioned according to the claims enables for facilitating low system overhead system information delivery in a beam based system, thereby providing at least part of the aforementioned advantages and improvements.

In more detail, the subject disclosure describes facilitating low system overhead system information delivery in a beam based system, which may, according to some examples of embodiments, prove advantageous over a proprietary solution for at least the following reasons.

Examples of embodiments described in the subject disclosure may, for instance, e.g. with regard to the facilitating of low system overhead system information delivery in a beam based system according to various examples of embodiments of the subject disclosure, realize a lower system overhead with more efficient SIB1 transmission scheme e.g. when the SIB1 content size is low or medium size. Moreover, there may be realized adaptivity to different network scenarios, i.e. network may utilize high number of SSBs e.g. to identify beams but transmit PDCCH/PDSCH for SIB1 with different beam configuration e.g. in order to limit system overhead.

Further advantages may become apparent to a person skilled in the art from the following detailed description.

### BRIEF DESCRIPTION OF THE DRAWINGS

Some examples of embodiments of the subject disclosure are described below, by way of example only, with reference to the accompanying drawings, in which:
FIG. 1 shows different multiplexing patterns of SSB and SIB1;
FIG. 2 shows different time domain allocation principles of SIB1;
FIG. 3 shows example illustrations of different configurations for the SIB1 (PDCCH+PDSCH) transmissions according to various examples of embodiments of the subject disclosure;
FIG. 4 shows a flowchart illustrating steps corresponding to an example method according to various examples of embodiments of the subject disclosure;
FIG. 5 shows a flowchart illustrating steps corresponding to an example method according to various examples of embodiments of the subject disclosure;
FIG. 6 shows a block diagram illustrating an example apparatus according to various examples of embodiments of the subject disclosure; and
FIG. 7 shows a block diagram illustrating an example apparatus according to various examples of embodiments of the subject disclosure.

### DEATILED DESCRIPTION

In general, two or more end points involved in a communication therebetween may be implemented as a particular type of end point (e.g. a communication station or entity or function, such as a terminal device, user equipment (UE), or other communication network element, a database, a server, host, etc.), or as one or more network elements or functions (e.g. virtualized network functions), such as communication network control elements or functions, for example access network elements like access points (APs), radio base stations (BSs), relay stations, eNBs, gNBs etc., and core network elements or functions, for example control nodes, support nodes, service nodes, gateways, user plane functions, access and mobility functions, etc.. These end points may belong to a single communication network system, different communication network systems, or a combination of at least one same communication network system and at least one different communication network system.

In the following, various examples of embodiments will be described using, as an example of a communication network to which examples of embodiments may be applied, a communication network architecture based on 3GPP standards for a communication network, such as a 5G/NR, without restricting the examples of embodiments to such an architecture. It, however, is obvious for a person skilled in the art that the examples of embodiments may also be applied to other kinds of communication networks like 4G and/or LTE (and even 6G and higher) where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but the subject disclosure can be extended and applied to any other type of communication network, such as a wired communication network or datacenter networking.

The following examples of embodiments are to be understood only as illustrative in nature. Although portions of the subject disclosure may refer to the expressions "an", "one", or "some" example(s) of embodiment(s) in several specific locations, this does not necessarily mean that each such reference is related to the same example(s) of embodiment(s), or that the described feature only applies to a single example of an embodiment. Individual features from different examples of embodiments may also be combined to provide other examples of embodiments. Furthermore, terms like "comprising" and "including" should be understood as not limiting the described examples of embodiments to consist of only those features that have been mentioned; such examples of embodiments can also contain features, structures, units, modules etc. that have not been specifically mentioned.

A simplified system architecture of a (tele)communication network including a mobile communication system, where some examples of embodiments, are applicable may include an architecture of one or more communication networks. The one or more communication networkes may include wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit (CU), which controls a respective coverage area or cell(s) and with which one or more communication stations such as communication elements or functions, like user devices (e.g. customer devices), mobile devices, or terminal devices, like a UE, or another device having a similar function, such as a modem chipset, a chip, a module etc., which can also be part of a station, an element, a function or an application configured to conduct a communication, such as a UE, an entity or function usable in a machine-to-machine communication architecture, or attached as a separate element to such an element, function or application capable of conducting a communication, or the like, are configured to communicate via one or more channels via one or more communication beams for transmitting several types of data in a plurality of access domains. Furthermore, (core) network elements or network functions ((core) network control elements or network functions, (core) network management elements or network functions), such as gateway network elements/functions, mobility management entities, a mobile switching center, servers, databases and the like may be included.

Functions and interconnections of the described elements and functions, which also depend on the actual network type, are apparent to those skilled in the art and may be described in corresponding specifications, so that a description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

It should be appreciated that according to some examples of embodiments, a so-called "liquid" or flexible network concept may be implemented where the operations and functionalities of a network element, a network function, or of another entity of the network, may be performed in different entities or functions, such as in a node, host or server, in a flexible manner. Thus, a "division of labor" between involved network elements, functions or entities may vary case by case.

The subject disclosure, in some examples of embodies, relates to facilitating low system overhead system information delivery in a beam based system. Further, the subject disclosure, in some examples of embodies, is related to 3GPP 6G physical layer design. More specifically, to facilitating low overhead and energy efficient system information delivery mechanism. Network energy efficiency is one of the main themes steering the design of the 6G.

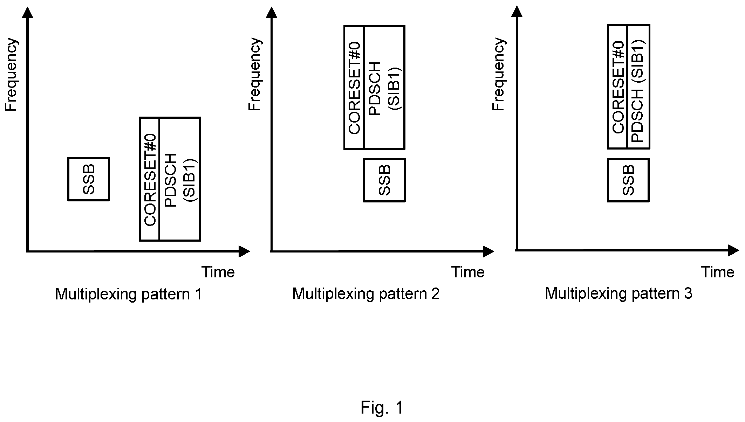

Moreover, the subject disclosure, in some examples of embodies, relates to downlink transmission in 6G. In 5G, during the initial access the user equipment (UE) detects primary and secondary synchronization signals (PSS, SSS) and decodes the Master Information Block (MIB). The MIB, PSS and SSS are also jointly referred to as Synchronization Signal and PBCH block (SSB). The MIB comprises a part of system information and further system information is SIB1 and other SIBs. The multiplexing of SSB and SIB1 is illustrated in FIG. 1, showing different multiplexing patterns of SSB and SIB1.

A cell typically transmits multiple SSBs corresponding to multiple beams (also referred to as TCI states). Each SSB has an associated search space (Type0-PDCCH) monitoring occasion which is used to transit a downlink assignment scheduling the corresponding system information block type 1 (SIB1) on the PDSCH. There is a quasi co-location relation (QCL) between an SSB and the demodulation reference signal (DM-RS) of the corresponding PDCCH/PDSCH/SIB1 which means that the UE can use some channel information acquired during the SSB reception to receive the corresponding SIB1. In other words, an SSB with a given index is a QCL source only for the DM-RS of one SIB1, i.e. the one SIB1 which is transmitted on the same beam as the SSB with this given index.

In new radio (NR), the UE has to detect MIB and SIB1 before trying connection in stand-alone NR. In other words, the minimum requirement for UE to camp on a cell is to decode MIB and SIB1. MIB is carried by the physical broadcast channel (PBCH). PBCH is a part of an SSB. SIB1 is carried by the downlink physical shared channel (PDSCH). MIB carries information about reference subcarrier spacing, control resource set (CORESET) and monitoring occasions for control channel (Type0-PDCCH) for SIB1 PDSCH scheduling, PDSCH DMRS position, etc. SIB1 carries all the basic information for UE to perform the initial access procedure to a cell. SIB1 also carries scheduling information for other SIBs.

In NR the monitoring occasions of the TypeO-PDCCH are associated to the SSBs. In other words, each SSB is having the associated TypeO-PDCCH monitoring occasion(s). With reference to FIG. 1, there are three SSB/CORESET#0 (for TypeO-PDCCH) multiplexing patterns (multiplexing patterns 1 to 3 as outlined below in more detail):

### Multiplexing pattern 1:

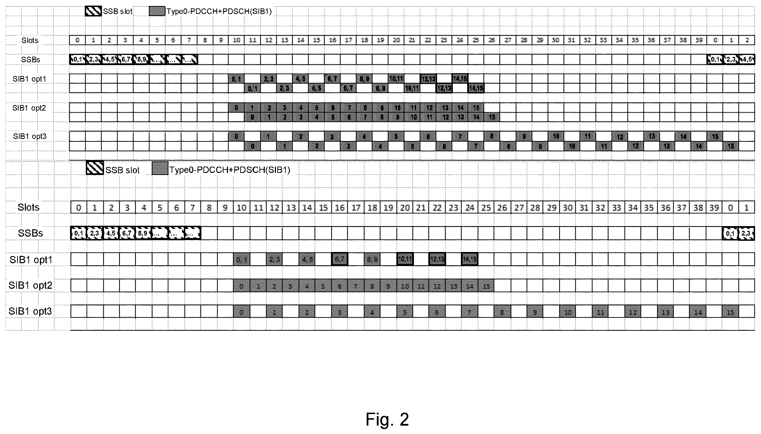

TDM and applicable in FR1 and FR2, monitoring occasion per SSB in two consecutive slots every 20 ms.
- There are three different time domain allocation principles based on how much overlapping in slot level there is between monitoring occasions:
   - SIB1 opt1: monitoring occasions of the TypeO-PDCCH of the two consecutive SSBs are in the same slot
   - SIB1 opt2: monitoring occasions of the TypeO-PDCCH of the two consecutive SSBs are overlapping in one slot
   - SIB1 opt3: monitoring occasions of the TypeO-PDCCH of the two consecutive SSBs are not overlapping in slot level
- With reference to FIG. 2, FIG. 2 illustrates how TypeO-PDCCH and PDSCH for SIB1 delivery are transmitted in case of envisioned 60 kHz subcarrier spacing and envisioned 16 SSBs in new 6G band FR3 (7-20 GHz) (wherein SSBs are indexed and corresponding TypeO-PDCCH and PDSCH are highlighted in grey). It shall be noted that FIG. 2 shows the first slot of the two consecutive slots where the TypeO-PDCCH of the certain SSB index may be transmitted.

### Multiplexing pattern 2:

Different SCS for SSB and CORESET#0, FDM and applicable only in FR2, one monitoring occasion with the same periodicity as SSB.

### Multiplexing pattern 3:

Same SCS for SSB and CORESET#0, FDM and applicable only in FR2, one monitoring occasion with the same periodicity as SSB.

Thus, as one can observe, the overhead from the SIB1 signalling is quite significant, especially with the high number of SSBs. On the other hand, high number of SSBs are required to achieve targeted coverage. It's to be noted that in FR3 it's expected and desired by the operators that the same sites as in FR1 could be used in FR3 as well.

Hence, there is the problem of system overhead from the SIB1 signaling. Thus, there may be required a solution for how to reduce the overhead of SIB1 transmission.

Regarding QCL assumption for the reception of the downlink signal, according to R1-1700771, QCL is defined as follows: Two antenna ports are said to be quasi co-located if properties of the channel over which a symbol on one antenna port is conveyed can be inferred from the channel over which a symbol on the other antenna port is conveyed.

Regarding QCL Types, "38.214 - 5.1.5 Antenna ports quasi co-location" defines four difference types of QCL as listed below:
- QCL-TypeA: Doppler shift, Doppler spread, average delay, delay spread
- QCL-TypeB: Doppler shift, Doppler spread
- QCL-TypeC: Average delay, Doppler shift
- QCL-TypeD: Spatial Rx parameter

When a signal (A) is QCLed (Quasi Co-located) with another signal (B),
- the two signal (A) and (B) has gone through very similar channel condition;
- in order for (A) and (B) to go through the similar channel, it is highly likely that they are from the same location(i.e. same place and same antenna). Hence, more specifically, it implies that the signal (A) and (B) are transmitted from the same TRP(Antenna Array) that applies the same Spatial Filter (beam, wherein a beam might be also referred to and understood as a Transmission Configuration Indicator (TCI) state);
- since the two signal reaches the receiver through similar channel, if the receiver can detect one of the signal (A) and figure out the channel properties of the signal, it will greatly help to detect the other signal (B).

For instance, when the PDCCH from a gNB is QCLed with SSB means that the PDCCH went through the similar channel condition as SSB. The channel information estimated to detect SSB can help detect PDCCH as well. 3GPP defines several parameters to define the channel condition as listed below:
- Doppler Shift
- Doppler Spread
- Average Delay
- Delay Spread
- Spatial Rx Parameter

One or more of these factors would form a property of the channel that two signal shares and the predefined group of these factors are labeled as QCL type (as indicated above).

Then one can define the relationship of two related signals like "The PDCCH signal from the gNB is QCLed with SSB via Type C". This mean that the PDCCH and the SSB went through the similar radio channel sharing the similar properties in terms of Average Delay and Doppler Shift.

In order to reduce SIB1 overhead, according to various examples of embodiments of the subject disclosure, there may be used multiple SSBs as a QCL source for a single SIB1, where each of the multiple SSBs is transmitted on a different beam. The single SIB1 (or its DM-RS) may have a QCL relationship with the multiple SSBs. For example, if four SSBs with indices 0, 1, 2 and 3 are used as QCL source for a SIB1 transmission, then the SIB1 overhead is reduced four times compared to the NR transmission.
- There can be a single downlink assignment in the common search space which allocates the SIB1 resources in which case the single downlink assignment (or its DM-RS) has a QCL relationship with the multiple SSBs (in this case the PDCCH overhead is also reduced), or
- There can be multiple downlink assignments where each of the downlink assignments allocates resources of the same single SIB1 and each of the downlink assignments (or its DM-RS) has a QCI relationship with a single SSB (i.e. with the SSB which is transmitted on the same beam as the corresponding downlink assignment). In this case the PDCCH overhead is not reduced.

Hence, the TypeO-PDCCH and PDSCH for SIB1 can be transmitted with the QCL source assumption being the combination of at least two SSBs, depending on the signalled value from the gNB to the UE in the SSB. The combination of the SSBs forming the QCL source (QCL-TypeC Average delay, Doppler shift and QCL-TypeD Spatial RX parameter) for the TypeO-PDCCH and PDSCH for SIB1 is indicated in the MIB.

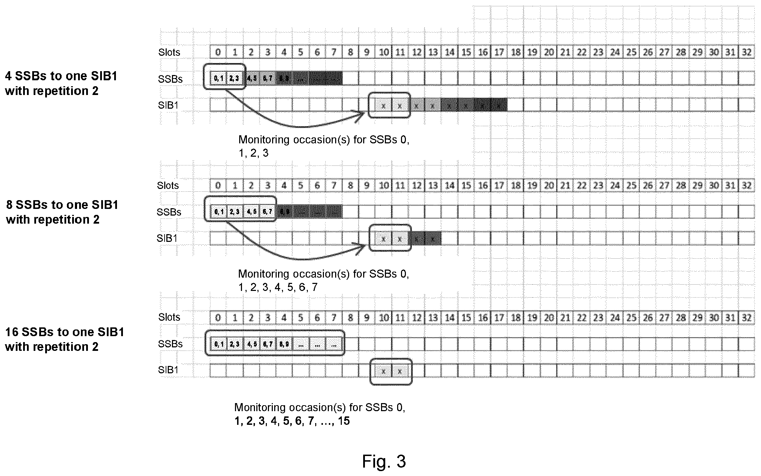

For instance, according to various examples of embodiments of the subject disclosure, the gNB may indicate in MIB that all the 16 SSBs transmitted form a single QCL source for the TypeO-PDCCH and PDSCH for SIB1. Furthermore, in this case the gNB may indicate the number of repetitions for the transmissions. Example illustrations where different number of SSBs {4, 8 and 16} form a single QCL source and TypeO-PDCCH and PDSCH are transmitted in two repeated slots are illustrated in FIG. 3.

According to various examples of embodiments of the subject disclosure, the PDCCH for the scheduling of PDSCH for SIB1 could be transmitted per SSB and PDSCH would having the functionality described above, i.e. SFN transmission based on multiple SSBs as a QCL source. In this case, the time domain resource allocation (PDCCH → PDSCH) shall support values to have long time domain separation between PDCCH and PDSCH especially for the PDCCHs with low SSB index.

Further, according to various examples of embodiments of the subject disclosure, UE steps to implement a solution to solve the above-identified problem may be as follows:
1. UE detects PSS/SSS, PBCH DMRS, demodulates and decodes PBCH.
2. UE reads from the PBCH payload the max number of SSBs (e.g. via subcarrier spacing indication where SCS 60 kHz may mean that there are max 16 SSBs).
3. UE reads from the PBCH payload (physical layer bits or MIB) the mapping between the SSBs and TypeO-PDCCH monitoring occasions, e.g. there could be options:
   - 1-1 (each SSB is having the associated PDCCH);
   - 4-1 (0-3 SSBs are mapped to the same monitoring occasions of PDCCH/form the single QCL source for PDCCH reception, 4-7 SSBs are mapped to the same monitoring occasions of PDCCH/form the single QCL source for PDCCH reception, ...);
   - 8-1 (0-7 SSBs are mapped to the same monitoring occasions of PDCCH/form the single QCL source for PDCCH reception, 8-15 ...); or
   - 16-1 (0-15 SSBs are mapped to the same monitoring occasions of PDCCH/form the single QCL source for PDCCH reception).
4. UE determines based on above information and based on other PDCCH configuration fields the monitoring occasions for the PDCCH for the certain group of SSBs.
5. UE monitors PDCCH according to the determined monitoring occasions and QCL source.
6. UE detects, demodulates and decodes PDCCH and reads scheduling information from DCI in PDCCH and receives PDSCH that carries SIB1.

Therefore, according to various examples of embodiments of the subject disclosure, there may be realized a lower system overhead with more efficient SIB1 transmission scheme e.g. when the SIB1 content size is low or medium size. Moreover, there may be realized adaptivity to different network scenarios, i.e. network may utilize high number of SSBs e.g. to identify beams but transmit PDCCH/PDSCH for SIB1 with different beam configuration e.g. in order to limit system overhead.

In the following, further examples of embodiments are described in relation to the aforementioned methods and/or apparatuses.

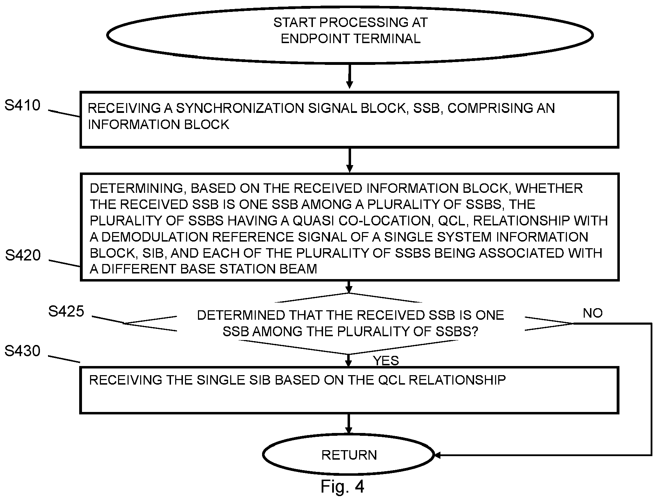

Referring now to FIG. 4, there is shown a flowchart illustrating steps corresponding to an example method according to various examples of embodiments of the subject disclosure.

In particular, according to FIG. 4, in S410, the method comprises receiving a synchronization signal block, SSB, comprising an information block.

It shall be noted that the information block may be such MIB as outlined above with reference to FIGS. 1 to 3.

Further, in S420, the method comprises determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam.

It shall be noted that the demodulation reference signal may be such PBCH-DMRS as outlined above with reference to FIGS. 1 to 3, the single SIB may be such SIB1 as outlined above with reference to FIGS. 1 to 3, and the QCL relationship may be such QCL relationship as outlined above with reference to FIGS. 1 to 3.

Additionally, in case YES is determined in S425, in S430, the method comprises receiving the single SIB based on the QCL relationship.

Moreover, according to at least some examples of embodiments, the SSB may further comprise a pair of synchronization signals; and the method may further comprise receiving the SSB based on detecting at least one synchronization signal of the pair of synchronization signals.

It shall be noted that the pair of synchronization signals may be such PSS and SSS as outlined above with reference to FIGS. 1 to 3

Furthermore, according to various examples of embodiments, the method may further comprise receiving the demodulation reference signal based on the QCL relationship; and receiving the single SIB further based on the received demodulation reference signal.

Moreover, according to at least some examples of embodiments, the method may further comprise estimating Doppler shift for a single base station beam among the different base station beams; constructing a combined Doppler shift to receive a single frequency network, SFN, transmission from multiple base station beams among the different base station beams; and receiving at least one of the following: the single SIB or the demodulation reference signal based on the combined Doppler shift.

It shall be noted that by SFN transmission, it shall be understood that multiple transmissions e.g. from multiple beams, on the same frequency resources, are combined over the air (i.e. over the radio interface).

Furthermore, according to various examples of embodiments, the method may further comprise receiving an indication about a number of repetitions for a transmission of the single SIB; and receiving the single SIB further based on the indication.

Moreover, according to at least some examples of embodiments, the method may further comprise determining a number of SSBs forming the plurality of SSBs based on receiving a subcarrier spacing, SCS, indication related to the plurality of SSBs

Furthermore, according to various examples of embodiments, the QCL relationship is at least one of the following: average delay, a Doppler shift or a spatial RX parameter.

It shall be noted that the QCL relationship may be at least one of such QCL-TypeA, QCL-TypeB, QCL-TypeC or QCL-TypeD as outlined above with reference to FIGS. 1 to 3.

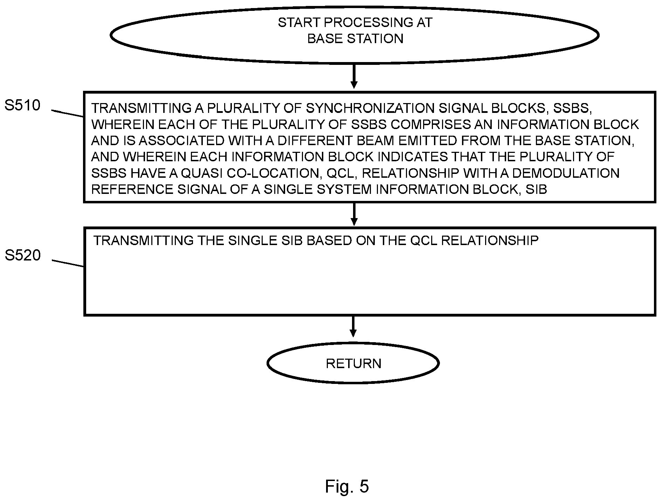

Referring now to FIG. 5, FIG. 5 shows a flowchart illustrating steps corresponding to an example method according to various examples of embodiments of the subject disclosure.

In particular, according to FIG. 5, in S510, the method comprises transmitting, at a base station, a plurality of synchronization signal blocks, SSBs, wherein each of the plurality of SSBs comprises an information block and is associated with a different beam emitted from the base station, and wherein each information block indicates that the plurality of SSBs have a quasi co-location, QCL, relationship with a demodulation reference signal of a single system information block, SIB.

It shall be noted that the base station may represent an access network entity or function, like e.g. at least part of a gNB. Moreover, the information block may be such MIB as outlined above with reference to FIGS. 1 to 3, the demodulation reference signal may be such PBCH-DMRS as outlined above with reference to FIGS. 1 to 3, and the single SIB may be such SIB1 as outlined above with reference to FIGS. 1 to 3.

Further, in S520, the method comprises transmitting the single SIB based on the QCL relationship.

Moreover, according to at least some examples of embodiments, each of the SSBs further comprises a pair of synchronization signals.

It shall be noted that the pair of synchronization signals may be such PSS and SSS as outlined above with reference to FIGS. 1 to 3.

Furthermore, according to various examples of embodiments, the method may further comprise transmitting the demodulation reference signal based on the QCL relationship.

Furthermore, according to various examples of embodiments, the QCL relationship may be based on one of a QCL-TypeC Average delay, a Doppler shift and/or a QCL-TypeD Spatial RX parameter.

It shall be noted that the one of the QCL-TypeC Average delay, the Doppler shift and the QCL-TypeD Spatial RX parameter are outlined above with reference to FIGS. 1 to 3.

Moreover, according to at least some examples of embodiments, the information block indicates that the plurality of SSBs are one of 4 SSBs, 8 SSBs and 16 SSBs, which form a single QCL source.

It shall be noted that an example in relation to such indication is shown at least in parts in FIG. 3.

Moreover, according to at least some examples of embodiments, the method may further comprise indicating a number of repetitions for a transmission of the single SIB; and transmitting the single SIB further based on the indicated number of repetitions.

It shall be noted that an example in relation to an example repetition of number 2 is shown at least in parts in FIG. 3.

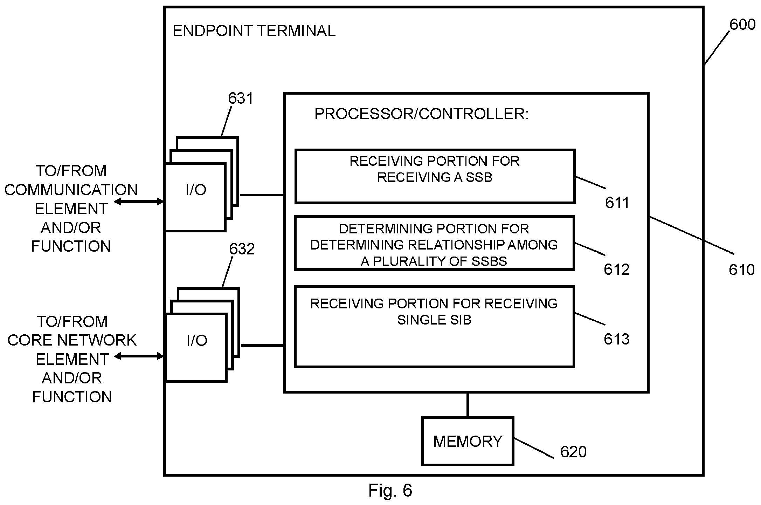

Referring now to FIG. 6, FIG. 6 shows a block diagram illustrating an example apparatus according to various examples of embodiments of the subject disclosure.

Specifically, FIG. 6 shows a block diagram illustrating an apparatus 600, which may represent an endpoint terminal (e.g. UE) as outlined above with reference to FIGS. 1 to 3, according to various examples of embodiments, which may participate in facilitating low system overhead system information delivery in a beam based system. Furthermore, even though reference is made to an endpoint terminal, the endpoint terminal may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 600 shown in FIG. 6 may include a processing circuitry, a processing function, a control unit or a processor 610, such as a CPU or the like, which is suitable to facilitate low system overhead system information delivery in a beam based system. The processor 610 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 631 and 632 denote input/output (I/O) units or functions (interfaces) connected to the processor or processing function 610. The I/O units 631 and 632 may be a combined unit including communication equipment towards several entities/elements, or may include a distributed structure with a plurality of different interfaces for different entities/elements. Reference sign 620 denotes a memory usable, for example, for storing data and programs/instructions to be executed by the processor or processing function 610 and/or as a working storage of the processor or processing function 610. It is to be noted that the memory 620 may be implemented by using one or more memory portions of the same or different type of memory, but may also represent an external memory, e.g. an external database provided on a cloud server.

The processor or processing function 610 is configured to execute processing related to the above described processing. In particular, the processor or processing circuitry or function 610 includes one or more of the following sub-portions. Sub-portion 611 is a receiving portion, which is usable as a portion for receiving a SSB. The portion 611 may be configured to perform processing according to S410 of FIG. 4. Further, sub-portion 612 is a determining portion, which is usable as a portion for determining a relationship among a plurality of SSBs. The portion 612 may be configured to perform processing according to S420 of FIG. 4. Moreover, sub-portion 613 is a receiving portion, which is usable as a portion for receiving a single SIB. The portion 613 may be configured to perform processing according to S430 of FIG. 4.

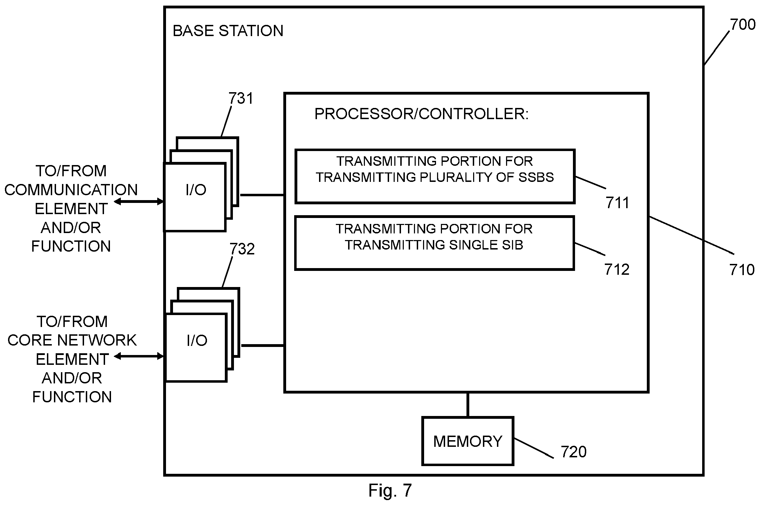

Referring now to FIG. 7, FIG. 7 shows a block diagram illustrating an example apparatus according to various examples of embodiments of the subject disclosure.

Specifically, FIG. 7 shows a block diagram illustrating an apparatus 700, which may represent a base station (e.g. access network entity or function, like gNB) as outlined above with reference to FIGS. 1 to 3, according to various examples of embodiments, which may participate in facilitating low system overhead system information delivery in a beam based system. Furthermore, even though reference is made to a base station, the base station may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 700 shown in FIG. 7 may include a processing circuitry, a processing function, a control unit or a processor 710, such as a CPU or the like, which is suitable to facilitate low system overhead system information delivery in a beam based system. The processor 710 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 731 and 732 denote input/output (I/O) units or functions (interfaces) connected to the processor or processing function 710. The I/O units 731 and 732 may be a combined unit including communication equipment towards several entities/elements, or may include a distributed structure with a plurality of different interfaces for different entities/elements. Reference sign 720 denotes a memory usable, for example, for storing data and programs/instructions to be executed by the processor or processing function 710 and/or as a working storage of the processor or processing function 710. It is to be noted that the memory 720 may be implemented by using one or more memory portions of the same or different type of memory, but may also represent an external memory, e.g. an external database provided on a cloud server.

The processor or processing function 710 is configured to execute processing related to the above described processing. In particular, the processor or processing circuitry or function 710 includes one or more of the following sub-portions. Sub-portion 711 is a transmitting portion, which is usable as a portion for transmitting a plurality of SSBs. The portion 711 may be configured to perform processing according to S510 of FIG. 5. Further, sub-portion 712 is a transmitting portion, which is usable as a portion for transmitting a single SIB. The portion 712 may be configured to perform processing according to S520 of FIG. 5.

It shall be noted that the apparatuses 600 and 700 as outlined above with reference to FIGS. 6 and 7 may comprise further/additional sub-portions, which may allow the apparatuses 600 and 700 to perform such methods/method steps as outlined above with reference to FIGS. 1 to 5.

Moreover, according to various examples of embodiments, an apparatus may comprise means for receiving a synchronization signal block, SSB, comprising an information block; means for determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and, if determined that the received SSB is one SSB among the plurality of SSBs, means for receiving the single SIB based on the QCL relationship.

According to various examples of embodiments, the SSB may further comprise a pair of synchronization signals; and the apparatus may further comprise means for receiving the SSB based on detecting at least one synchronization signal of the pair of synchronization signals.

According to various examples of embodiments, the apparatus may further comprise means for receiving the demodulation reference signal based on the QCL relationship; and means for receiving the single SIB further based on the received demodulation reference signal.

According to various examples of embodiments, the apparatus may further comprise means for estimating Doppler shift for a single base station beam among the different base station beams; means for constructing a combined Doppler shift to receive a single frequency network, SFN, transmission from multiple base station beams among the different base station beams; and means for receiving at least one of the following: the single SIB or the demodulation reference signal based on the combined Doppler shift.

According to various examples of embodiments, the apparatus may further comprise means for receiving an indication about a number of repetitions for a transmission of the single SIB; and means for receiving the single SIB further based on the indication.

According to various examples of embodiments, the apparatus may further comprise means for determining a number of SSBs forming the plurality of SSBs based on receiving a subcarrier spacing, SCS, indication related to the plurality of SSBs.

According to various examples of embodiments, the QCL relationship may be at least one of the following: average delay, a Doppler shift or a spatial RX parameter.

Moreover, according to at least some examples of embodiments, an apparatus may comprise means for transmitting a plurality of synchronization signal blocks, SSBs, wherein each of the plurality of SSBs comprises an information block and is associated with a different beam emitted from the apparatus, and wherein each information block indicates that the plurality of SSBs have a quasi co-location, QCL, relationship with a demodulation reference signal of a single system information block, SIB; and means for transmitting the single SIB based on the QCL relationship.

According to at least some examples of embodiments, each of the SSBs may further comprises a pair of synchronization signals.

According to at least some examples of embodiments, the apparatus may further comprise means for transmitting the demodulation reference signal based on the QCL relationship.

According to at least some examples of embodiments, the QCL relationship may be based on one of a QCL-TypeC Average delay, a Doppler shift and/or a QCL-TypeD Spatial RX parameter.

According to at least some examples of embodiments, the information block may indicate that the plurality of SSBs are one of 4 SSBs, 8 SSBs and 16 SSBs, which form a single QCL source.

According to at least some examples of embodiments, the apparatus may further comprise means for indicating a number of repetitions for a transmission of the single SIB; and means for transmitting the single SIB further based on the indicated number of repetitions.

Moreover, according to various examples of embodiments, there may be provided a computer program product for a computer, including software code portions for performing the steps of any of the above-outlined methods outlined in relation to e.g. FIGS. 4 and 5, when said product is run on the computer.

According to at least some examples of embodiments, with regard to the computer program product, the computer program product may include a computer-readable medium on which said software code portions are stored, and/or the computer program product may be directly loadable into the internal memory of the computer and/or transmittable via a network by means of at least one of upload, download or push procedures.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, 6G, Bluetooth, Infrared, and the like may be used; additionally, examples of embodiments may also apply wired technologies, e.g. IP based access technologies like cable networks or fixed lines.
- examples of embodiments suitable to be implemented as software code or portions thereof and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of examples of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- examples of embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- examples of embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- examples of embodiments may also be implemented as computer program products, including a computer usable medium having a computer readable program code embodied therein, the computer readable program code adapted to execute a process as described in embodiments, wherein the computer usable medium may be a non-transitory medium.

The term "circuitry" may refer to one or more or all of the following examples of embodiments:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion
      of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (e.g., tangible, not a signal) as opposed to a limitation on data storage persistency (e.g., RAM vs. ROM).

As used herein, "at least one of the following: " and "at least one of " and similar wording, where the list of two or more elements are joined by "and" or "or", mean at least any one of the elements, or at least any two or more of the elements, or at least all the elements.

Although the subject disclosure has been described herein before with reference to various examples of embodiments thereof, the subject disclosure is not limited thereto and it will be apparent to a person skilled in the art that various modifications can be made to the subject disclosure.

The following meanings for the abbreviations used herein apply:
- 3GPP: 3^{rd} Generation Partnership Project
- 3GGP2: 3^{rd} Generation Partnership Project 2
- 4G: Fourth Generation
- 5G: Fifth Generation
- 6G: Sixth Generation
- AP: Access Point
- API: Application Programming Interface
- BS: Base Station
- CDMA: Code Division Multiple Access
- CN: Core Network
- CORESET: Control Resource Set
- CSI: Channel State Information
- DCI: Downlink Control Information
- DMRS: Demodulation Reference Signal
- eNB: Evolved Node B
- ETSI: European Telecommunications Standards Institute
- FDM: Frequency Domain Multiplexing
- gNB: Next Generation Node B
- IEEE: Institute of Electrical and Electronics Engineers
- ITU: International Telecommunication Union
- LTE: Long Term Evolution
- LTE-A: Long Term Evolution-Advanced
- MANETs: Mobile Ad-Hoc Networks
- MIB: Master Information Block
- MIMO: Multiple Input Multiple Output
- NB: Node B
- NF: Network Function
- NR: New Radio
- NW: Network
- PBCH: Physical Broadcast Channel
- PDCCH: Physical Downlink Control Channel
- PDSCH: Physical Downlink Shared Channel
- PUCCH: Physical Uplink Control Channel
- PUSCH: Physical Uplink Shared Channel
- QCL: Quasi co-location
- RAM: Random Access Memory
- RAN: Radio Access Network
- RE: Resource Element
- Rel: Release
- ROM: Read Only Memory
- RX: Receiver
- SCS: Subcarrier Spacing
- SFN: Single Frequency Network
- SIB1: System Information Block Type 1
- SSB: Synchronization Signal and PBCH Block
- TDM: Time Division Multiplexing
- TISPAN: Telecoms & Internet converged Services & Protocols for Advanced Networks
- TRP: Transmission Reception Point
- TRS: Tracking RS
- UE: User Equipment
- UL: Uplink
- UWB: Ultra-Wideband
- WCDMA: Wideband Code Division Multiple Access
- WiMAX: Worldwide Interoperability for Microwave Access
- WLAN: Wireless Local Area Network

## Claims

1. An apparatus, comprising
means for receiving a synchronization signal block, SSB, comprising an information block;
means for determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and
if determined that the received SSB is one SSB among the plurality of SSBs, means for receiving the single SIB based on the QCL relationship.

2. The apparatus according to claim 1, wherein
the SSB further comprises a pair of synchronization signals; and
the apparatus further comprises means for receiving the SSB based on detecting at least one synchronization signal of the pair of synchronization signals.

3. The apparatus according to claim 1 or 2, wherein the apparatus further comprises
means for receiving the demodulation reference signal based on the QCL relationship; and
means for receiving the single SIB further based on the received demodulation reference signal.

4. The apparatus according to any of claims 1 to 3, wherein the apparatus further comprises
means for estimating Doppler shift for a single base station beam among the different base station beams;
means for constructing a combined Doppler shift to receive a single frequency network, SFN, transmission from multiple base station beams among the different base station beams; and
means for receiving at least one of the following: the single SIB or the demodulation reference signal based on the combined Doppler shift.

5. The apparatus according to any of claims 1 to 4, wherein the apparatus further comprises
means for receiving an indication about a number of repetitions for a transmission of the single SIB; and
means for receiving the single SIB further based on the indication.

6. The apparatus according to any of claims 1 to 5, wherein the apparatus further comprises means for determining a number of SSBs forming the plurality of SSBs based on receiving a subcarrier spacing, SCS, indication related to the plurality of SSBs.

7. The apparatus according to any of claims 1 to 6, wherein the QCL relationship is at least one of the following: average delay, a Doppler shift or a spatial RX parameter.

8. An apparatus, comprising
means for transmitting a plurality of synchronization signal blocks, SSBs,
wherein each of the plurality of SSBs comprises an information block and is associated with a different beam emitted from the apparatus, and
wherein each information block indicates that the plurality of SSBs have a quasi co-location, QCL, relationship with a demodulation reference signal of a single system information block, SIB; and
means for transmitting the single SIB based on the QCL relationship.

9. The apparatus according to claim 8, wherein each of the SSBs further comprises a pair of synchronization signals.

10. The apparatus according to claim 8 or 9, wherein the apparatus further comprises means for transmitting the demodulation reference signal based on the QCL relationship.

11. The apparatus according to any of claims 8 to 10, wherein the QCL relationship is based on one of a QCL-TypeC Average delay, a Doppler shift and/or a QCL-TypeD Spatial RX parameter.

12. The apparatus according to any of claims 8 to 11, wherein the information block indicates that the plurality of SSBs are one of 4 SSBs, 8 SSBs and 16 SSBs, which form a single QCL source.

13. The apparatus according to any of claims 8 to 12, wherein the apparatus further comprises
means for indicating a number of repetitions for a transmission of the single SIB; and
means for transmitting the single SIB further based on the indicated number of repetitions.

14. A method, comprising
receiving a synchronization signal block, SSB, comprising an information block;
determining, based on the received information block, whether the received SSB is one SSB among a plurality of SSBs, the plurality of SSBs having a quasi co-location, QCL, relationship with a demodulation reference signal of a single system information block, SIB, and each of the plurality of SSBs being associated with a different base station beam; and
if determined that the received SSB is one SSB among the plurality of SSBs, receiving the single SIB based on the QCL relationship.

15. A method, comprising
transmitting, at a base station, a plurality of synchronization signal blocks, SSBs,
wherein each of the plurality of SSBs comprises an information block and is associated with a different beam emitted from the base station, and
wherein each information block indicates that the plurality of SSBs have a quasi co-location, QCL, relationship with a demodulation reference signal of a single system information block, SIB; and
transmitting the single SIB based on the QCL relationship.

16. A computer program product for a computer, including software code portions for performing the steps of any of claim 14 or 15, when said product is run on the computer.
